# EUROPÄISCHE PATENTSCHRIFT

(11) **EP 3 966 723 B1**
(45) Veröffentlichungstag und Bekanntmachung des Hinweises auf die Patenterteilung: **03.01.2024**
(21) Anmeldenummer: 20739895.9
(22) Anmeldetag: 01.07.2020
(51) Int. Cl.: G06F 21/62, H04L 9/40, H04L 67/12

(54) **VERFAHREN UND ANORDNUNG ZUR BEREITSTELLUNG VON DATEN EINER INDUSTRIELLEN AUTOMATISIERUNGSANORDNUNG ZU EINER EXTERNEN ANORDNUNG**
METHOD AND ARRANGEMENT FOR PROVIDING DATA FROM AN INDUSTRIAL AUTOMATION ARRANGEMENT TO AN EXTERNAL ARRANGEMENT
PROCÉDÉ ET SYSTÈME DE FOURNITURE DE DONNÉES D'UN SYSTÈME D'AUTOMATISATION INDUSTRIEL À UN SYSTÈME EXTERNE

(30) Priorität: 02.07.2019 EP 19183899; 30.06.2020 EP 20183028
(43) Veröffentlichungstag der Anmeldung: 16.03.2022
(73) Patentinhaber: Siemens Aktiengesellschaft, 80333 München (DE)
(72) Erfinder: FEHLING, Marcus, 81739 München (DE); KONOPKA, Frank, 90518 Altdorf (DE); LAMM, Tobias, 80469 München (DE); TOLKS, Burkhard, 90471 Nürnberg (DE); WELP, Peter, 79336 Herbolzheim (DE)
(74) Vertreter: Siemens Patent Attorneys
(86) Internationale Anmeldenummer: PCT/EP2020/068526
(87) Internationale Veröffentlichungsnummer: WO 2021/001425

(56) Entgegenhaltungen:
- EP-A1- 3 515 035
- US-A1- 2019 014 117
- Unknown: "CUMULOCITY IoT EDGE", , 1. August 2018 (2018-08-01), Seiten 1-2, XP055732070, Gefunden im Internet: URL:https://iotconnectedbundles.techdata.c om/wp-content/uploads/2018/08/2018_8_Corpo rate_FS_CumulocityIoTEdge_powered_by_Dell_ Technologies_web.pdf [gefunden am 2020-09-18]

## Beschreibung

Die Erfindung betrifft ein Verfahren zur Bereitstellung von Daten einer Datenquelle zu einer externen Anordnung gemäß dem Oberbegriff des Patentanspruchs 1, und eine Anordnung zur Bereitstellung von Daten einer Datenquelle zu einer externen Anwendung gemäß dem Oberbegriff des Patentanspruchs 7.

Maschinendaten, Produktionsdaten und Planungsdaten einer industriellen Automatisierungsanordnung und anderer Datenquellen sind regelmäßig in lokalen, zu öffentlichen Netzen abgeschotteten Produktionsnetzwerken verfügbar. Sie werden dort zur Steuerung und zur Kontrolle von industriellen Produktionsabläufen und Prozessen eingesetzt. Regelmäßig umfassen solche Daten auch vertrauliche Informationen, beispielsweise über Produktionsprozesse und Produktionsverfahren, Finanzdaten etc., so dass eine vollständige Weitergabe der auf der sogenannten Automatisierungsebene verfügbaren Informationen an externe Stellen unerwünscht ist. Umgekehrt ist auch ein direkter Zugriff von externen Instanzen, also Geräten außerhalb des privaten Automatisierungsnetzwerks, auf Geräte, Komponenten etc. des privaten Automatisierungsnetzwerkes oft unerwünscht bzw. mit Risiken verbunden.

Aus diesem Grund sind technische Maßnahmen gebräuchlich, um das private Automatisierungsnetzwerk, also eine Datenquelle, in geeigneter Weise von öffentlichen Netzwerken, insbesondere dem Internet oder einer sogenannten "Cloud" ("Datenwolke"), abzutrennen. Eine solche Maßnahme kann beispielsweise im Vorsehen einer sogenannten "Firewall" bestehen. Damit ist es auch möglich, einen kontrollierten Zugriff zu bewerkstelligen, beispielsweise kann ein sogenannter "Tunnel" zwischen einem Gerät des privaten Automatisierungsnetzwerks und einem externen Server etabliert werden, womit auf eine abgesicherte Art und Weise ein privater Datenverkehr in oder über das öffentliche Datennetzwerk (z.B. Internet) bewerkstelligt werden kann.

Es ist auch bekannt, innerhalb des privaten Automatisierungsnetzwerkes bzw. an der "Grenze" zwischen dem privaten Automatisierungsnetzwerk und dem öffentlichen Netzwerk ein sogenanntes Edge-Gerät oder Edge-Device anzuordnen, das zum einen dazu dient, im Automatisierungsnetzwerk Ressourcen zur Datenverarbeitung zur Verfügung zu stellen, und zum anderen dazu dient, Daten aus dem Automatisierungsnetzwerk einer externen Instanz, beispielsweise einer cloudbasierten Anwendung oder Lösung, zur Verfügung zu stellen, und umgekehrt Daten und Befehle von einer cloudbasierten Anwendung zu empfangen und in dem privaten Automatisierungsnetzwerk anzuwenden. Man spricht bezüglich der Funktionalität der Daten-Bereitstellung und - Übertragung auch allgemein von einer "Gateway-Komponente"; diese kann auch auf einer anderen Komponente als dem "Edge-Gerät" installiert sein.

Sofern der Betreiber der cloudbasierten, externen Anwendung und des Automatisierungsnetzwerkes bzw. der Datenquelle entweder identisch sind, oder aber ein besonderes Vertrauensverhältnis untereinander besteht, kann mit einer solchen Edge-Device basierten Lösung der Datenverkehr zwischen den Automatisierungskomponenten des industriellen Automatisierungsnetzwerkes bzw. der industriellen Automatisierungsanordnung einerseits und der externen Anwendung andererseits einvernehmlich geplant und realisiert werden.

Ein Problem kann dann bestehen, wenn konkrete produktionsbezogene Daten (sog. Rohdaten), also Daten des privaten Automatisierungsnetzwerkes, nicht außerhalb der Produktionsumgebung (Automatisierungsanordnung) verfügbar sein sollen, andererseits aber seitens einer externen Anwendung das Erfordernis besteht, dass diese Daten verfügbar sind, um Geschäftsmodelle, Optimierungen oder dergleichen zu ermöglichen. Zu den Rohdaten gehören in diesem Zusammenhang auch bereits vorverarbeitete lokale Daten, Geschäftszahlen, Leistungskennzahlen (sog. "KPIs" - Key Performance Indikatoren) etc. einer Datenquelle, die geschützt werden sollen.

Datenaustausch zwischen privaten Domänen und externen Anwendungen ist für unzählige Anwendungen essentiell, insbesondere bei der Nutzung cloud-basierter Anwendungen. Zudem sind Daten heutzutage vermehrt eine Handelsware. Während bei einer reinen bilateralen Beziehung zwischen Datenquelle und einer externen Anwendung der Zugriff auf Daten und eine etwaige Gegenleistung (Vergütung) einfach geregelt werden kann, ist bei komplexen Anordnungen die Kontrolle des Datenzugriffs nicht mehr trivial, weil je nach externer Anwendung andere Datenschutzrichtlinien einzuhalten sind.

In einem Beispiel kann eine Finanzbehörde berechtigt sein, umfänglich und natürlich kostenlos auf alle finanziellen Transaktionen eines Unternehmens zuzugreifen. Aus demselben Datenbestand des Unternehmens kann aber auch ein Werbeunternehmen Adressen von Kunden zu Werbezwecken beziehen und muss dafür aber eine Vergütung bezahlen; in diesem Fall sind aber die mit den Kunden getätigten Umsätze und dgl. nicht Bestandteil der bereitzustellenden Daten. Das heißt, dass die Datenzugriffe der Finanzbehörde einen anderen Berechtigungsumfang haben als die des werbetreibenden Geschäftspartners. Alle die für die Datenzugriffe geltenden Regeln, Zugriffsberechtigungen und Restriktionen müssen jeweils manuell administriert werden, was einen personalintensiven Verwaltungsaufwand erfordert.

Die Druckschrift EP 3 515 035 A1 - Schulz "COMPUTER SYSTEM AND METHOD FOR CONTROLLING ACCESS TO DIGITAL DATA OF A DEVICE" zeigt die Kontrolle eines Datenzugriffs anhand von Metainformationen, die den Daten zugeordnet sind und die eine semantische Bedeutung der Daten beschreiben. Anhand einer Berechtigungsinformation, die einem Anfrager zugeordnet ist, und anhand der Metainformationen wird der Datenzugriff gestattet oder verhindert.

Die Veröffentlichung US 2019/0014117 A1 - Li et al. "SCALABLE AND SECURE RESOURCE ISOLATION AND SHARING FOR IOT NETWORKS" beschreibt die Kontrolle eines Datenzugriffs mit Hilfe von Autorisierungs-Token, die mit einer Anfrage zu einer Datenquelle übermittelt werden.

Es ist also eine Aufgabe der vorliegenden Erfindung, den Datenzugriff einer externen Anwendung auf eine Datenquelle automatisiert zu administrieren.

Die Aufgabe wird erfindungsgemäß durch ein Verfahren gemäß Patentanspruch 1 und durch eine Anordnung (Komponente) gemäß Patentanspruch 7 gelöst.

Dabei wird ein Verfahren zur Bereitstellung von Daten einer Datenquelle vorgeschlagen, insbesondere von einer industriellen Automatisierungsanordnung, zu einer externen Anwendung, wobei die externe Anwendung außerhalb eines ersten Datennetzwerks der Datenquelle angeordnet ist, insbesondere in einer Daten-Cloud und/oder eines zweiten Datennetzwerks betrieben wird, und wobei durch eine Gateway-Komponente, insbesondere ein industrielles Edge-Gerät, Rohdaten der Datenquelle verarbeitet und die verarbeiteten Daten der externen Anwendung zur Verfügung gestellt werden. Dabei wird in einem ersten Schritt von der externen Anwendung ein Arbeitsauftrag zu der Gateway-Komponente übermittelt, wobei der Arbeitsauftrag zumindest Angaben über eine Identität und/oder Rolle des Nutzers der externen Anwendung, über die zu verarbeitenden Rohdaten der Datenquelle, einen Algorithmus für die Abstrahierung und/oder Anonymisierung der Rohdaten und Angaben für eine Häufigkeit oder Frequenz der Datenverarbeitung umfasst. In einem zweiten Schritt wird der Arbeitsauftrag durch die Gateway-Komponente geprüft, wonach in einem dritten Schritt die Rohdaten gemäß Arbeitsauftrag erfasst und verarbeitet werden. Schließlich werden in einem vierten Schritt die abstrahierten und/oder anonymisierten Daten der externen Anwendung oder einem in dem Arbeitsauftrag definierten Ziel bereitgestellt. Damit wird einem externen Anwender ein automatisch kontrollierter Zugriff und somit die Nutzung der Daten ermöglicht, ohne dass er Zugriff auf die zu Grunde liegenden Rohdaten haben muss. Der Grad des Datenzugriffs wird dabei zwischen den beteiligten Komponenten (Datenquelle, Gateway-Komponente) automatisch unter Berücksichtigung von Erfordernissen und Regeln ausgehandelt und realisiert.

Die Erfindung wird außerdem durch eine Anordnung zur Bereitstellung von Daten einer Datenquelle gelöst, insbesondere von einer industriellen Automatisierungsanordnung, zu einer externen Anwendung, wobei die externe Anwendung außerhalb eines ersten Datennetzwerks der Datenquelle angeordnet ist, insbesondere in einer Daten-Cloud und/oder eines zweiten Datennetzwerks betrieben wird, und wobei eine Gateway-Komponente, insbesondere ein industrielles Edge-Gerät, dazu einrichtet ist, Rohdaten der Datenquelle zu verarbeiten und die verarbeiteten Daten der externen Anwendung zur Verfügung zu stellen. Dabei ist die Gateway-Komponente dazu eingerichtet, in einem ersten Schritt von der externen Anwendung einen Arbeitsauftrag zu empfangen, wobei der Arbeitsauftrag zumindest Angaben über eine Identität und/oder Rolle des Nutzers der externen Anwendung, über die zu verarbeitenden Rohdaten der Automatisierungsanordnung, einen Algorithmus für die Abstrahierung und/oder Anonymisierung der Rohdaten und Angaben für eine Frequenz oder Häufigkeit der Datenverarbeitung umfasst. In einem zweiten Schritt wird der Arbeitsauftrag geprüft. In einem dritten Schritt werden die Rohdaten gemäß Arbeitsauftrag erfasst und verarbeitet, und in einem vierten Schritt werden die abstrahierten und/oder anonymisierten Daten der externen Anwendung oder einem in dem Arbeitsauftrag definierten Ziel bereitgestellt. Durch diese Komponente könnten die Vorteile realisiert werden, die bereits anhand des Verfahrens diskutiert wurden.

Erfindungsgemäß wird in dem zweiten Schritt im Falle einer negativen Prüfung eine Antwortnachricht mit alternativen Bedingungen des Arbeitsauftrages an die externe Anwendung übermittelt, wobei die externe Anwendung die alternativen Bedingungen entweder bestätigt oder ablehnt oder zur Definition eines neuen Arbeitsauftrages verwendet. So kann dynamisch und automatisch ein für beide Transaktionspartner geeigneter Grad der Datenverarbeitung vereinbart werden.

Vorteilhafte Ausgestaltungen der Erfindung sind in den abhängigen Patentansprüchen angegeben. Die dort beschriebenen Merkmale und deren Vorteile können sowohl einzeln, als auch in sinnfälliger Kombination miteinander realisiert werden.

In einer vorteilhaften Ausgestaltung wird mit dem Arbeitsauftrag eine Gegenleistung für die Bereitstellung der verarbeiteten, abstrahierten und/oder anonymisierten Daten angeboten. Auch diese Vergütung kann wie der Grad der Datenverarbeitung iterativ verhandelt werden. Eine Vergütung kann zwar in Geld (oder "Punkten" oder dgl.) erfolgen. Es ist aber auch möglich, dass aus den übertragenen Daten neue Daten (z.B. Resultate, Statistiken) ermittelt werden, die im Gegenzug der Datenquelle zur Verfügung gestellt werden.

Vor oder während des zweiten Schritts kann der Algorithmus durch eine Zertifizierungsstelle hinsichtlich der Einhaltung von Datenschutzkriterien geprüft werden. Gleichzeitig ist auch eine unabhängige Prüfung dahingehend möglich, ob der Algorithmus die Daten in der gewünschten Weise bearbeitet und bereitstellt. Ein dabei erteiltes Zertifikat kann manipulationssicher dem Algorithmus oder einem standardisierten Arbeitsauftrag, einem sog. Arbeitsauftrag-Template, zugeordnet werden. Vorteilhaft werden die Datenschutzkriterien durch die Gateway-Komponente der Zertifizierungsstelle benannt oder übermittelt, so dass die Datenquelle eine volle Kontrolle über die eigenen Daten bzw. Rohdaten behält. Je nach Transaktionspartner, also je nach Rolle und/oder Identität des Nutzers der externen Anwendung, kann auch dieser die Richtlinien vorgeben. So kann beispielsweise die schon erwähnte Finanzbehörde die zuzugreifenden Rohdaten und die damit vorzusehende Datenverarbeitung (falls notwendig) definieren.

Vorteilhaft wird in dem zweiten Schritt bei der Prüfung die Identität oder Rolle des Nutzers der externen Anwendung berücksichtigt. Mit der Identität oder Rolle kann auch eine Datenzugriffsberechtigung, ein sog. Trust-Level, verknüpft sein. Identität, Rolle oder Trust-Level können zusätzlich auch durch Zertifikate nachgewiesen werden.

Der Arbeitsauftrag sollte maschinenlesbar formuliert sein; dies gilt insbesondere für den Algorithmus. Es bietet sich beispielsweise ein Datenformat auf XML- oder JSON- oder vergleichbarer Basis an, welches Schlüsselworte enthalten kann, die auch von Menschen lesbar sind. Insbesondere ist es so möglich, Arbeitsaufträge manuell vorzubereiten (Templates), auszugestalten und zu prüfen.

Vorteilhaft ist der Algorithmus in Form eines Modells zur Definition der Abstrahierung der Daten der zumindest einen industriellen Automatisierungskomponente gespeichert. Dies hat den Vorteil, dass die Abstrahierung der Daten durch ein maschinenunabhängiges, semantisches Modell festgelegt werden kann. Insbesondere kann ein solches Modell durch eine Person festgelegt werden, die keine Programmiersprache beherrscht. Außerdem sind solche Modelle universell verwendbar und transferierbar.

Vorteilhaft ist dem Algorithmus bzw. dem darin enthaltenen Modell eine maschinenlesbare Beschreibung zugeordnet, wobei die Beschreibung Informationen über die zu verarbeitenden Daten (Variablen, Datenpunkte, Dateien etc.) der Datenquelle (z.B. Automatisierungskomponente) und über einen Grad oder die Art der Abstrahierung der Daten durch den Algorithmus oder durch das darin verwirklichte oder geladene Modell umfasst, wobei vor einer Ausführung des Algorithmus` oder des Modells die Beschreibung gegen ein Regelwerk geprüft wird, wobei durch das Regelwerk Regeln über erlaubte oder verbotene Zugriffe auf die Daten der Datenquelle bzw. Automatisierungskomponente und/oder Regeln über die erforderliche Abstrahierung der Daten durch den Algorithmus vorgegeben sind, und wobei der Algorithmus und ggf. das darin enthaltene Modell zur Abstrahierung der Daten nur im Falle einer Konformität zu dem Regelwerk zur Ausführung freigegeben wird.

Durch solche Meta-Informationen ist es möglich, den Algorithmus oder das darin verwirklichte Modell zu überprüfen, was in einer vorteilhaften Variante auch automatisch oder teilautomatisch geschehen kann. Vorteilhaft werden diese Meta-Informationen, also die maschinenlesbare Beschreibung, die beispielsweise in Form einer XML-Datei vorliegen kann, dem Algorithmus, dem Arbeitsauftrag oder dem zugrunde liegenden Modell zur Definition der Abstrahierung der Daten untrennbar hinzugefügt und von einem Provider des Arbeitsauftrages (oder eines "Templates") mitgeliefert. Insbesondere ist es damit möglich, vorzugeben, inwieweit Rohdaten mindestens abstrahiert werden müssen. So ist es beispielsweise möglich, für bestimmte Eingangswerte, beispielsweise Betriebszeiten einer Maschine, zu definieren, dass diese Daten nur in Form eines Mittelwertes oder eines kumulierten Wertes über einen Monat weitergegeben werden. Dabei ist es also vorteilhaft, wenn die maschinenlesbare Beschreibung des Algorithmus' und eine maschinenlesbare Beschreibung eines Regelwerks syntaxkompatibel sind, um einen Vergleich, sowohl manueller als auch maschinenlesbarer Art, zu vereinfachen.

Vorteilhaft wird der Arbeitsauftrag oder ein generisches Template dessen oder zumindest ein im Arbeitsauftrag einzubettendes oder zu referenzierendes Modell zur Abstrahierung der Daten oder der Algorithmus mittels eines Dienstes zur Bereitstellung für industrielle Applikationen, insbesondere einen industriellen App-Store, zur Verfügung gestellt. In einer vorteilhaften Variante ist das ein ähnlicher oder sogar derselbe App-Store, der auch für ein industrielles Edge-Device Anwendungen bereitstellt. Dies gilt insbesondere in den Fällen, in denen der Arbeitsauftrag oder sogar ein Datenverarbeitungsmodul zur Ausführung des Arbeitsauftrages als eine Anwendung (App) für das industrielle Edge-Device ausgeführt ist. In diesem Fall ergibt sich weiterhin der Vorteil, dass ein industrielles Edge-Device ohnehin Zugriff auf die Automatisierungsdaten der unterlagerten Automatisierungskomponenten (Datenquelle) hat und somit die Rohdaten zur Verarbeitung durch den Arbeitsauftrag bzw. den Algorithmus liefern kann. Insbesondere weist ein industrielles Edge-Device in der Regel auch Kommunikationskanäle nach "außen", also in eine externe Umgebung, eine "Cloud" oder das Internet, auf.

Ausführungsbeispiele des erfindungsgemäßen Verfahrens und damit auch ein Ausführungsbeispiel der erfindungsgemäßen Komponente werden nachfolgend anhand der Zeichnungen erläutert.

Dabei zeigen:
- Figur 1:: in schematischer Darstellung eine Automatisierungsanordnung, die über eine erfindungsgemäße Gateway-Komponente mit einer externen Anwendung verknüpft ist, und
- Figur 2:: ein schematisches Ablaufdiagramm bei der Verarbeitung eines Arbeitsauftrages.

Den nachfolgend erläuterten Ausführungsbeispielen ist gemein, dass ein Anfragender Bedarf an Daten hat und dafür - in einer vorteilhaften Variante - eine Gegenleistung (z.B. Datengetriebener Service, Geld, Rückgabe von Daten, ...) bietet. In dem Fall, in dem die Daten einen kommerziellen Wert haben bzw. bewertet werden können, kann man Komponenten, die diese Daten anbieten und vermarkten, auch als "Datenmarktplätze" beschreiben. Da sich hinter geschäftlichen Daten Betriebsgeheimnisse sowie schutzwürdige Interessen verbergen, muss jeglicher Missbrauch der Daten oder eine nicht gewünschte Freigabe von Wissen verhindert werden. Es muss also sichergestellt werden, dass die zur Verfügung gestellten Daten vor der Übertragung zum Datennutzer aus den Rohdaten (Ursprungsdaten) so umgeformt (verarbeitet, abstrahiert, anonymisiert) werden, dass es für den Datenerzeuger geschäftlich unkritisch ist, dass diese Daten weitergegeben werden.

Erfindungsgemäß werden Maßnahmen zur Verfügung gestellt, die es ermöglichen, Datennutzer und Datenerzeuger so zu trennen, dass einerseits für den Datennutzer keine Rückschlüsse auf die Ursächlichkeit der Daten möglich ist, und andererseits dem Datennutzer die Daten in ausreichender Qualität zur Verfügung stehen. Bei einer unmittelbaren Verwendung der Daten wird auf Basis dieser Daten eine Leistung erbracht, von der der Erzeuger der Daten unmittelbar profitiert. Bei einer mittelbaren Verwendung der Daten kann der Datennutzer die Daten weiter aufbereiten oder umformen (z.B. durch die Einbeziehung weiterer Datenquellen) und somit auf eine andere Wertschöpfungsstufe heben, anschließend verwertet oder verkauft er diese weiter.

Kernstück dieses automatisierten Datenmarktplatzes ist die Fähigkeit zur automatisierten Vertragsverhandlung und zur überwachten Vertragserfüllung, was eine gesteuerte und überwachte Zur-Verfügungstellung von Daten erfordert. Kernbestandteil ist ein "elektronischer Vertrag", dessen Kern wiederum ein maschinenlesbarer Arbeitsauftrag ist. Dieser enthält die genauen Anweisungen darüber, wie die Parteien mit dem Verhandlungsgegenstand Daten umzugehen haben. Für diesen Zweck gliedert sich der technische Arbeitsauftrag neben den Basisdaten (Identitäten, Rollen) in drei Teilaspekte:
1) Eine Beschreibung, welche Datenquellen des Datenerzeugers benötigt werden, um das gewünschte Ergebnis ableiten zu können.
2) Eine Beschreibung, wie die von den Datenquellen bereitgestellten Daten verarbeitet werden sollen und in welchem Format das Ergebnis der Verarbeitung dem Datennutzer zur Verfügung gestellt werden soll.
3) Angaben darüber, mit welcher Häufigkeit oder Frequenz die Daten von den Datenquellen des Datenerzeugers abgerufen werden sollen und, davon unabhängig, in welcher Frequenz die Ergebnisse der Verarbeitung and den Datennutzer weitergegeben werden.

Weitere Angaben und Bedingungen können selbstverständlich auch Bestandteil des elektronischen Vertrags und damit des Arbeitsauftrages sein, beispielsweise, über welchen Zeitraum Daten zur Verfügung gestellt werden sollen.

Das Verfahren ermöglicht es dem Datennutzer, bei der Anfrage nach Daten den Arbeitsauftrag mit seiner Beschreibung so zur Verfügung zu stellen, dass der Datenerzeuger (Eigentümer der Rohdaten) vor Abarbeitung des Arbeitsauftrags bewusst entscheiden kann, ob er sowohl die gewünschten Datenquellen, als auch das angefragte Ergebnis (z.B. verarbeitete oder abstrahierte Rohdaten) in der hinterlegten Frequenz zur Verfügung stellen und dazu den Arbeitsauftrag bei sich lokal installieren möchte. Nach der Freigabe durch den Datenerzeuger wird der Arbeitsauftrag auf revisionssichere Art abgelegt. Weiterhin protokolliert die Plattform, die den Arbeitsauftrag ausführt, die Aktivitäten des lokal ablaufenden Arbeitsauftrags, z.B. welche Daten bzw. Rohdaten aufgenommen und welche Daten dem Nutzer zur Verfügung gestellt wurden. Dabei wird sichergestellt, dass immer eindeutig und manipulationssicher zu erkennen ist, welcher Arbeitsauftrag für die Datenabfrage, Verarbeitung, Frequenz und Ausgabe zuständig war. Somit ist es sowohl dem Datenerzeuger als auch dem Datennutzer immer möglich, die Aktivitäten des Arbeitsauftrags und somit die Einhaltung des Vertrags zu kontrollieren, Manipulationen rechtzeitig zu entdecken bzw. diese in höchstem Maße zu erschweren.

Der Grad der Automatisierung der Vertragsverhandlung ist ein entscheidender Faktor dafür, inwieweit datengetriebene Geschäftsmodelle zu einem erfolgreich skalierbaren Geschäft werden. Daher sind vorteilhaft weitere Mechanismen vorgesehen, um die Automatisierung auf sichere Art weiter zu erhöhen. Zu diesen Mechanismen gehört z.B. die Möglichkeit, dass eine dritte, neutrale Kontrollinstanz durch Prüfung des Arbeitsauftrages bzw. des darin definierten Algorithmus` gegen ein ebenfalls maschinenlesbares und durch den Datenerzeuger definiertes Regelwerk ("Policy") die Verarbeitung der Daten erst freigeben muss.

Die Art der zu übermittelnden Ergebnisse ist an die Rolle und Rechte des anfragenden Datennutzers revisionssicher gebunden (z.B. Finanzbeamter, interner Kunde, externer Kunde, beauftragter Dienstleister), so dass ein- und derselbe Arbeitsauftrag in der Ausgabe der Ergebnisse eingeschränkt werden kann. Derselbe Mechanismus kann auch dafür genutzt werden, dass der Datenerzeuger z.B. über einen maschinenlesbaren Handelsplatz durch eine Kontrollinstanz zertifizierte und somit aus seiner Sicht sichere Arbeitsaufträge zum Verkauf oder Tausch anbietet.

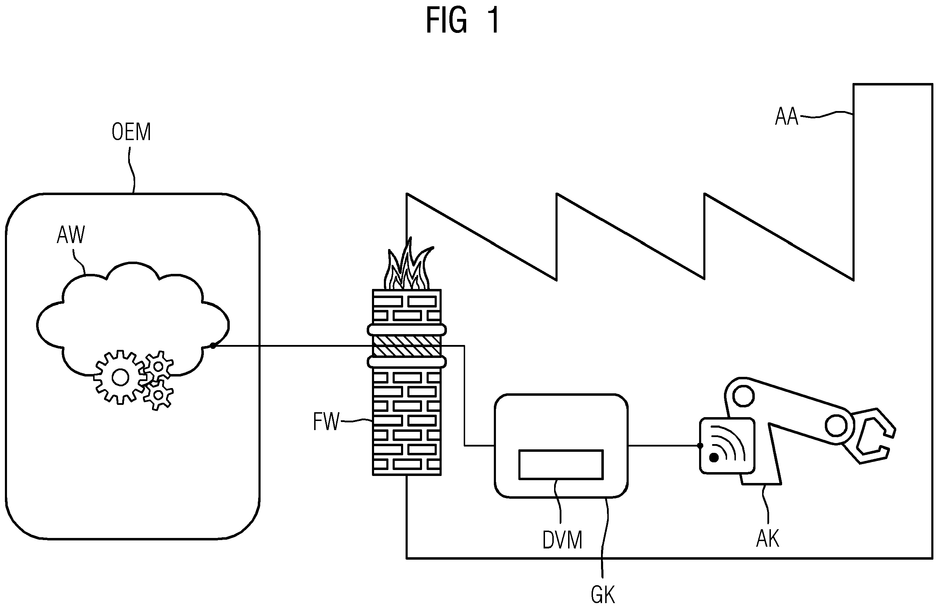

Die Figur 1 zeigt eine industrielle Automatisierungsanordnung AA, die beispielsweise eine Fabrikationsstelle eines Produzenten ist. In der Automatisierungsanordnung AA werden verschiedene Komponenten wie speicherprogrammierbare Steuerungen, HMI-Geräte, MES-Systeme und dergleichen betrieben, wobei in der Figur 1 exemplarisch nur eine Automatisierungskomponente AK (beispielsweise eine Werkzeugmaschine) dargestellt ist. Produktionsdaten (sog. Rohdaten) der Automatisierungskomponente AK können durch die Gateway-Komponente GK, die im vorliegenden Ausführungsbeispiel ein industrielles Edge-Device ist, zugegriffen werden. Die Gateway-Komponente GK kann durch eine datentechnische Firewall FW der Automatisierungsanordnung AA Daten mit einer externen Anwendung AW austauschen, wobei die externe Anwendung AW im Datennetz eines Service-Anbieters OEM angeordnet ist. Die Verbindung zwischen der Gateway-Komponente GK und der externen Anwendung AW kann beispielsweise über einen Datenkanal im Internet erfolgen. Der Betreiber der externen Anwendung AW, der Service-Anbieter OEM, ist in diesem Ausführungsbeispiel Eigentümer der Automatisierungskomponente AK.

Das erfindungsgemäße Verfahren wird in diesem Kontext angewendet, um das Geschäftsmodell des Service-Anbieters OEM, der Eigentümer der Automatisierungskomponente AK ist, zu ermöglichen. Das Geschäftsmodell sieht ein sogenanntes "Pay-per-Use" vor, also ein laufzeit- und belastungsabhängiges Vergütungsmodell für den Einsatz der Maschine. Es sei darauf hingewiesen, dass im vorliegenden Beispiel der Service-Anbieter OEM zwar ein Maschinenhersteller ist, in anderen Beispielen aber auch ein anderer, "nicht-industrieller" Service-Anbieter OEM (wie Banken, Versicherungen, Maintenance Service Provider etc.) oder gar eine Behörde sein kann. Damit kann der Service-Anbieter OEM - wie im nächsten Absatz beschrieben - Eigentümer der Automatisierungskomponente sein, muss es aber nicht notwendigerweise.

Der in einem externen Netzwerk angesiedelte Hersteller bzw. Serviceanbieter OEM benötigt für die Abrechnung und Wartung der Maschine, der Automatisierungskomponente AK, entsprechende Informationen. Diese Daten sollen aber nach dem Wunsch des Nutzers, also des Betreibers der Automatisierungsanordnung AA, in einer Form vorliegen, die keine Rückschlüsse auf Produktionsdetails ermöglicht. Ein direkter Zugriff auf die Rohdaten ist also ausgeschlossen.

Zu diesem Zweck definiert der Service-Anbieter OEM einen Algorithmus zur Datenvorverarbeitung, der die Rohdaten aus dem industriellen Umfeld vorverarbeitet und dabei derart abstrahiert, so dass nur solche Informationen an seine Datenverarbeitung und Buchhaltung übermittelt werden, die für das Anbieten des Geschäftsmodells oder Services unbedingt benötigt werden. Dazu definiert der Service-Anbieter OEM (Hersteller der Maschine) ein Modell zur Abstrahierung der Daten, welches beispielsweise in einer domänen-spezifischen Sprache, einer Datenbankabfragesprache (z.B. SQL), durch ein klassisches Berechnungsprogramm (z.B. Matlab des Anbieters The Mathworks) oder dergleichen vorliegt. Dabei ist wichtig, dass sowohl der Datenzugriff auf die Produktionsdaten (Rohdaten) der Automatisierungskomponente AK als auch die Datenverarbeitung (Abstrahierung) modelliert werden können.

Vorteilhaft wird eine solche Abfrage und Vorverarbeitung (Abstrahierung) der Daten, also das Modell, gekapselt, beispielsweise in einem Verarbeitungsbaustein (Container), also mit ablauffähigem Programmcode geliefert. Dabei ist wichtig, dass Integrität, Authentizität und Knowhow-Schutz gewährleistet sind, was bedeutet, dass sowohl die Belange des Service-Anbieters OEM als auch die Belange des Betreibers der Automatisierungsanordnung AA nachhaltig berücksichtigt werden können. Vorteilhaft wird also der Verarbeitungsbaustein, der das Modell zur Definition der Abstrahierung der Daten und das Modell zum Zugriff auf die Daten enthält, zertifiziert und in einer weiteren vorteilhaften Variante auch verschlüsselt.

Der Algorithmus oder, wie hier, der gekapselte Verarbeitungsbaustein ist wichtiger Bestandteil eines neuen Arbeitsauftrages, der an die Gateway-Komponente GK gesendet wird. Der Arbeitsauftrag enthält also neben dem eigentlichen Algorithmus noch eine maschinenlesbare Beschreibung, sog. Meta-Informationen dessen, was mit den Rohdaten passiert, sowie Vorschriften über Frequenz der Datenverarbeitung etc. Der Algorithmus ist in diesem Fall zertifiziert, so dass ein Zertifikat einer unabhängigen Prüfstelle enthalten ist, welches nachweist, dass der Algorithmus genau das leistet, was in den Meta-Informationen beschrieben ist. Außerdem ist Identität und Rolle des Anfragenden niedergelegt.

Der Arbeitsauftrag wird seitens der Gateway-Komponente GK geprüft.

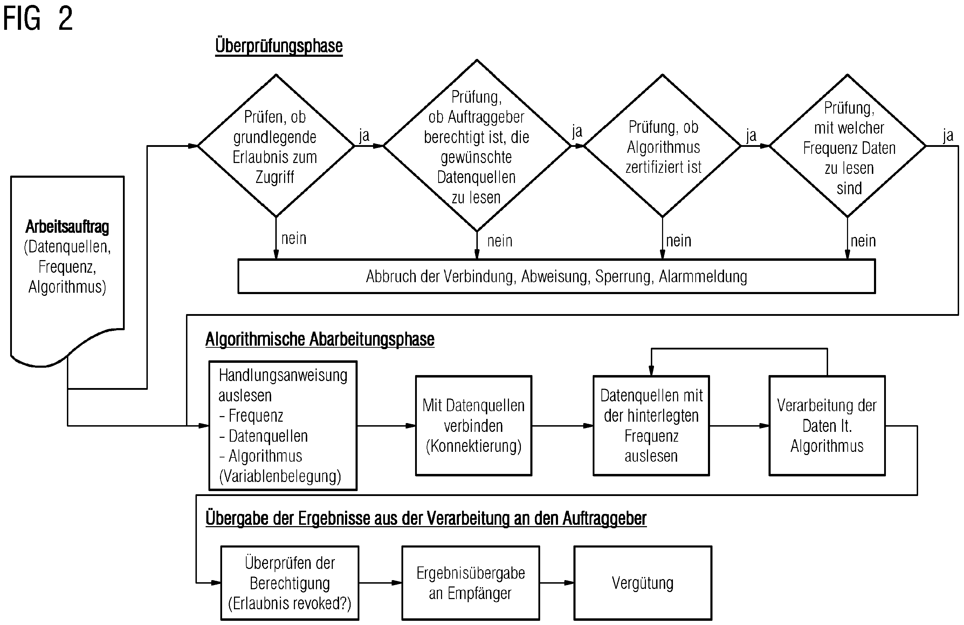

Die Figur 2 zeigt ein mögliches Ablaufschema der Prüfung und Abarbeitung des Arbeitsauftrages. Der Arbeitsauftrag wird in einer erste Phase (Überprüfungsphase) hinsichtlich verschiedener Kriterien des Regelwerks geprüft. In der Algorithmischen Abarbeitungsphase werden die Rohdaten gewonnen und verarbeitet.

Dem Arbeitsauftrag ist in der vorliegenden Variante als sogenannte Meta-Information eine Beschreibung in Form einer XML-Datei beigefügt, die sowohl die zugegriffenen Rohdaten definiert, als auch die Abstrahierung der Rohdaten beschreibt und die Ausgabeparameter der damit bewerkstelligten Datenverarbeitung bzw. Datenabstrahierung angibt. Im vorliegenden Ausführungsbeispiel hat der Betreiber der Automatisierungsanordnung AA ein Regelwerk definiert, welches ebenfalls in Form einer XML-Datei vorliegt. In diesem Regelwerk sind für jede Identität oder Rolle einer "Datensenke" separat sowohl diejenigen Datenpunkte zur Gewinnung der Rohdaten definiert, auf die zugegriffen werden darf, als auch vorgegeben, in welcher Form und Frequenz diese Daten verarbeitet werden müssen, also einen minimalen Grad der Abstrahierung. Im vorliegenden Fall gibt dieses Regelwerk an, dass durch einen Arbeitsauftrag mit der Identität oder Rolle des Betreibers OEM auf Einsatzzeiten zugegriffen werden kann, auf maximale Drehmomente eines Antriebs der Automatisierungskomponente AK und auf Alarmmeldungen. In dem Regelwerk ist weiterhin definiert, dass Alarme nur ohne Zeitstempel weitergegeben werden dürfen, dass Einsatzzeiten kumuliert über einen Monat weitergebeben werden dürfen, und dass Drehmomentwerte eines Antriebs nur hinsichtlich der Häufigkeit des Erreichens eines bestimmten Drehmomentes ("Überlast") weitergegeben werden dürfen. Das Regelwerk und die Meta-Informationen des Verarbeitungsbausteins können also automatisch miteinander abgeglichen werden, so dass der Arbeitsauftrag automatisch geprüft und freigegeben oder abgelehnt oder nachverhandelt werden kann.

Bei der Ausführung greift die Gateway-Komponente GK bzw. das Datenverarbeitungsmodul (die Laufzeitumgebung), in der der Arbeitsauftrag ausgeführt wird, auf die prinzipiell vertraulichen Maschinendaten der Automatisierungskomponente AK zu. Im vorliegenden Fall werden als weiterzugebende Daten die Information ermittelt, dass der Nutzer die Maschine im vertraglich vereinbarten Rahmen genutzt hat. Im Gegenzug erfolgt als "Vergütung" für die Zur-Verfügungstellung der Daten eine elektronische Freigabeinformation, die an die Maschine gesendet wird, wodurch eine weitere Nutzung ermöglicht wird. Anderenfalls würde die Maschine für eine weitere Nutzung gesperrt.

Für den Fall, dass beispielsweise die im Arbeitsauftrag geforderte Frequenz der Übertragung der Nutzungsdaten gegen das interne Regelwerk der Gateway-Komponente verstößt, kann der Arbeitsauftrag mit einer elektronischen Ablehnung beantwortet werden, die die Angabe "unzulässige Zugriffsfrequenz auf Betriebsdaten" umfasst. Dann kann, ebenfalls vollautomatisch, ein neuer Arbeitsauftrag mit einer geringeren Anforderung an die Frequenz erstellt und übertragen werden. Somit können die beteiligten Systeme innerhalb spezifizierter Regeln und Grenzen einen akzeptablen Arbeitsauftrag untereinander aushandeln.

In einer Variante kann auch auf Planungsdaten oder andere lokale Daten jeglicher Art zugegriffen werden, sofern das zur Ausführung des Services der externen Anwendung AW notwendig ist. Dies bedeutet, dass auch die Daten mehrerer industrieller Komponenten miteinander kombiniert werden können.

Anstelle des hier gezeigten Ausführungsbeispiels des "Pay-per-Use"-Anwendungsfalls kann das hier geschilderte Verfahren und die Komponente (Verarbeitungsbaustein) auch für eine vorausschauende Instandhaltung (predictive maintenance), eine Restwertbestimmung (z.B. für eine steuerliche Abschreibung), für eine Kalkulation von Versicherungsrisiken oder dergleichen verwendet werden. Der Service-Anbieter OEM kann also auch eine Bank, eine Versicherung, ein Unternehmen für Wartungsdienstleistungen oder ein anderer "Daten-Konsument" sein.

Während des laufenden Betriebs der industriellen Automatisierungsanordnung AA werden nun durch den Verarbeitungsbaustein in dem Datenverarbeitungsmodul DVM regelmäßig (z.B. zyklisch) die in dem Abstrahierungsmodell definierten Rohdaten der Automatisierungskomponente AK erfasst, protokolliert und gemäß der definierten Abstrahierung verarbeitet. Die verarbeiteten Daten werden dann über eine Datenverbindung der Anwendung AW zur Verfügung gestellt.

Wesentlich ist, dass die Gateway-Komponente GK einen einheitlichen, multifunktionalen Zugriffspunkt für die privaten Rohdaten bildet, womit unterschiedliche Arbeitsaufträge rollen- und/oder identitätsabhängig geprüft, ggf. nachverhandelt und ausgeführt werden können. Es ist also wesentlich, dass mittels eines "Handshakeverfahrens" eine Vorabprüfung der Zulässigkeit der Abfrage an Hand von einer maschinenlesbaren Beschreibung der Datenverarbeitung und ggf. eine Abfrage von Identität und Rolle des Abfragenden erfolgt.

Ein anderer Arbeitsauftrag kann die Übermittlung von Umsatzzahlen an eine Finanzbehörde betreffen, die daraus eine Besteuerung ermittelt. Ein solcher Arbeitsauftrag, der durch ein Zertifikat der Behörde digital signiert ist, umfasst also eine Definition über Umsatz- oder Finanzdaten, die in einer vorgeschriebenen Frequenz (hier: stündlich) übertragen werden sollen. Dabei sollen nach Warenart kumulierte Umsatzzahlen ermittelt werden. Dies ist im Algorithmus des Arbeitsauftrages definiert.

Gemäß dem Schema aus Figur 2 wird der Arbeitsauftrag zunächst geprüft. Zunächst wird festgestellt, dass Umsatzzahlen grundsätzlich zu den erlaubten Rohdaten gehören. Anschließend wird geprüft, ob der Auftraggeber, also eine Person, die mit der anfragenden Anwendung oder dem Arbeitsauftrag verknüpft ist, eine Zugriffsberechtigung für die angefragten Datenquellen und damit für die zu verarbeitenden Rohdaten hat. Diese Berechtigung kann für bekannte Auftraggeber gespeichert sein; alternativ kann dafür ein Zertifikat oder dgl. mit dem Arbeitsauftrag verbunden sein. In einer Variante kann die Berechtigung auch alternativ oder zusätzlich rollenbasiert zugeordnet sein. Als nächstes wird geprüft, ob der Arbeitsauftrag als Ganzes oder zumindest der auf die Rohdaten anzuwendende Algorithmus zertifiziert ist. Falls nicht, kann alternativ zum Abweisen des Arbeitsauftrages der Arbeitsauftrag auch an eine Zertifizierungsstelle zur Prüfung gesendet werden; dieser Zwischenschritt ist in der Figur 2 jedoch nicht dargestellt. Schließlich wird geprüft, ob die Zugriffsfrequenz auf die Rohdaten und/oder die Zyklenfrequenz der Durchführung des Arbeitsauftrages bzw. des enthaltenen Algorithmus akzeptabel ist. Falls eine der Prüfungen ein negatives Ergebnis (in der Figur 2 jeweils: "nein") aufweist, wird in einer vorher definierten Art der Arbeitsauftrag abgewiesen oder "eskaliert".

Nach der Überprüfungsphase wird der Arbeitsauftrag abgearbeitet, wozu im erforderlichen Umfang auf die referenzierten Datenquelle zugegriffen und die dabei gewonnenen Rohdaten verarbeitet werden. Schließlich werden die Ergebnisse an den Auftraggeber übermittelt, wobei insbesondere bei länger laufenden Arbeitsaufträgen überprüft werden kann, ob die Berechtigung noch vorliegt. Im gegenwärtigen Ausführungsbeispiel heißt das, dass stündlich für jede Warengruppe aus den Umsatzzahlen ein kumulierter Umsatzwert ermittelt und an die Finanzbehörde gemeldet wird.

Danach kann eine etwaige vorher vereinbarte Vergütung oder Gegenleistung erfolgen.

## Patentansprüche

1. Verfahren zur Bereitstellung von Daten einer Datenquelle, insbesondere von einer industriellen Automatisierungsanordnung (AA), zu einer externen Anwendung (AW),
wobei die externe Anwendung (AW) außerhalb eines ersten Datennetzwerks der Datenquelle angeordnet ist, insbesondere in einer Daten-Cloud und/oder eines zweiten Datennetzwerks betrieben wird,
wobei durch eine Gateway-Komponente (GK), insbesondere ein industrielles Edge-Gerät, Rohdaten der Datenquelle verarbeitet und die verarbeiteten Daten der externen Anwendung (AW) zur Verfügung gestellt werden,
wobei in einem ersten Schritt von der externen Anwendung ein Arbeitsauftrag zu der Gateway-Komponente übermittelt wird, wobei der Arbeitsauftrag zumindest Angaben über eine Identität und/oder Rolle des Nutzers der externen Anwendung, über die zu verarbeitenden Rohdaten der Datenquelle, einen Algorithmus für die Abstrahierung und/oder Anonymisierung der Rohdaten und Angaben für eine Häufigkeit oder Frequenz der Datenverarbeitung umfasst,
wobei in einem zweiten Schritt der Arbeitsauftrag durch die Gateway-Komponente geprüft wird,
dass in einem dritten Schritt die Rohdaten gemäß Arbeitsauftrag erfasst und verarbeitet werden, und
wobei in einem vierten Schritt die abstrahierten und/oder anonymisierten Daten der externen Anwendung oder einem in dem Arbeitsauftrag definierten Ziel bereitgestellt werden **dadurch gekennzeichnet, dass**
in dem zweiten Schritt im Falle einer negativen Prüfung eine Antwortnachricht mit alternativen Bedingungen des Arbeitsauftrages an die externe Anwendung übermittelt wird, wobei die externe Anwendung die alternativen Bedingungen entweder bestätigt oder ablehnt oder zur Definition eines neuen Arbeitsauftrages verwendet.

2. Verfahren nach Patentanspruch 1,
**dadurch gekennzeichnet, dass**
mit dem Arbeitsauftrag eine Gegenleistung für die Bereitstellung der abstrahierten und/oder anonymisierten Daten angeboten wird.

3. Verfahren nach einem der vorhergehenden Patentansprüche,
**dadurch gekennzeichnet,**
**dass** vor oder während des zweiten Schritts der Algorithmus durch eine Zertifizierungsstelle hinsichtlich der Einhaltung von Datenschutzkriterien geprüft wird.

4. Verfahren nach Patentanspruch 3,
**dadurch gekennzeichnet,**
**dass** der Zertifizierungsstelle die Datenschutzkriterien durch die Gateway-Komponente benannt oder übermittelt werden.

5. Verfahren nach einem der vorhergehenden Patentansprüche,
**dadurch gekennzeichnet, dass**
in dem zweiten Schritt bei der Prüfung die Identität oder Rolle des Nutzers der externen Anwendung berücksichtigt wird.

6. Verfahren nach einem der vorhergehenden Patentansprüche,
**dadurch gekennzeichnet, dass**
der Arbeitsauftrag oder zumindest der Algorithmus mittels eines Dienstes zur Bereitstellung von industriellen Applikationen, insbesondere einen industriellen App-Store, zur Verfügung gestellt wird.

7. Anordnung zur Bereitstellung von Daten einer Datenquelle, insbesondere von einer industriellen Automatisierungsanordnung (AA), zu einer externen Anwendung (AW),
wobei die Anordnung eine Gateway-Komponente (GK) und die externe Anwendung (AW) umfasst,
wobei die externe Anwendung (AW) außerhalb eines ersten Datennetzwerks der Datenquelle angeordnet ist, insbesondere in einer Daten-Cloud und/oder eines zweiten Datennetzwerks betrieben wird,
wobei die Gateway-Komponente (GK), insbesondere ein industrielles Edge-Gerät, dazu einrichtet ist, Rohdaten der Datenquelle zu verarbeiten und die verarbeiteten Daten der externen Anwendung (AW) zur Verfügung zu stellen, wobei die Gateway-Komponente dazu eingerichtet ist
in einem ersten Schritt von der externen Anwendung (AW) einen Arbeitsauftrag zu empfangen, wobei der Arbeitsauftrag zumindest Angaben über eine Identität und/oder Rolle des Nutzers der externen Anwendung (AW), über die zu verarbeitenden Rohdaten der Automatisierungsanordnung, einen Algorithmus für die Abstrahierung und/oder Anonymisierung der Rohdaten und Angaben für eine Frequenz oder Häufigkeit der Datenverarbeitung umfasst,
in einem zweiten Schritt den Arbeitsauftrag zu prüfen,
in einem dritten Schritt die Rohdaten gemäß Arbeitsauftrag zu erfassen und zu verarbeiten, und
in einem vierten Schritt die abstrahierten und/oder anonymisierten Daten der externen Anwendung oder einem in dem Arbeitsauftrag definierten Ziel bereitzustellen **dadurch gekennzeichnet, dass**
die Gateway-Komponente (GK) dazu eingerichtet ist in dem zweiten Schritt im Falle einer negativen Prüfung eine Antwortnachricht mit alternativen Bedingungen des Arbeitsauftrages an die externe Anwendung (AW) zu übermitteln, und wobei die externe Anwendung (AW) zur Bestätigung oder Ablehnung der alternativen Bedingungen oder zur Definition eines neuen Arbeitsauftrages eingerichtet ist.

8. Anordnung nach Patentanspruch 7,
**dadurch gekennzeichnet, dass**
der Arbeitsauftrag das Angebot einer Gegenleistung für die Bereitstellung der abstrahierten und/oder anonymisierten Daten umfasst.

9. Anordnung nach einem der Patentansprüche 7 oder 8,
**dadurch gekennzeichnet,**
**dass** eine Zertifizierungsstelle vorgesehen ist, die dazu eingerichtet ist, vor oder während des zweiten Schritts den Algorithmus hinsichtlich der Einhaltung von Datenschutzkriterien zu prüfen.

10. Anordnung nach Patentanspruch 9,
**dadurch gekennzeichnet,**
**dass** die Gateway-Komponente dazu eingerichtet ist, der Zertifizierungsstelle die Datenschutzkriterien zu benennen oder zu übermitteln.

11. Anordnung nach einem der Patentansprüche 7 bis 10,
**dadurch gekennzeichnet, dass**
vorgesehen ist, in dem zweiten Schritt bei der Prüfung die Identität oder Rolle des Nutzers der externen Anwendung zu berücksichtigen.

12. Anordnung nach einem der Patentansprüche 7 bis 11,
**dadurch gekennzeichnet, dass**
ein Dienst zur Bereitstellung von industriellen Applikationen, insbesondere einen industriellen App-Store, vorgesehen ist, wobei der Dienst dazu eingerichtet ist, eine Anzahl vorbereiteter Arbeitsaufträge oder zumindest einen vorbereiteten Algorithmus zum Abruf bereitzustellen.

## Claims

1. Method for providing data from a data source, in particular from an industrial automation arrangement (AA), to an external application (AW),
wherein the external application (AW) is arranged outside a first data network of the data source, in particular is operated in a data cloud and/or a second data network,
wherein a gateway component (GK), in particular an industrial Edge device, processes raw data from the data source and makes the processed data available to the external application (AW), wherein a first step involves the external application transmitting a work order to the gateway component, wherein the work order comprises at least details about an identity and/or role of the user of the external application, about the raw data to be processed from the data source, an algorithm for the abstraction and/or anonymization of the raw data and details about a regularity or frequency of the data processing,
wherein a second step involves the work order being checked by the gateway component,
wherein a third step involves the raw data being captured and processed according to the work order, and
wherein a fourth step involves the abstracted and/or anonymized data being provided to the external application or to a destination defined in the work order,
**characterized in that**
a negative check in the second step results in a response message with alternative conditions of the work order being transmitted to the external application, wherein the external application either confirms or rejects the alternative conditions or uses them to define a new work order.

2. Method according to Patent Claim 1,
**characterized in that**
the work order is accompanied by an offer of recompense for the provision of the abstracted and/or anonymized data.

3. Method according to either of the preceding patent claims,
**characterized**
**in that** the algorithm is checked by a certificate authority, before or during the second step, with regard to the meeting of data protection criteria.

4. Method according to Patent Claim 3,
**characterized**
**in that** the data protection criteria are cited or transmitted to the certificate authority by the gateway component.

5. Method according to one of the preceding patent claims,
**characterized in that**
the check in the second step takes account of the identity or role of the user of the external application.

6. Method according to one of the preceding patent claims,
**characterized in that**
the work order or at least the algorithm is made available by means of a service for providing industrial applications, in particular an industrial app store.

7. Arrangement for providing data from a data source, in particular from an industrial automation arrangement (AA), to an external application (AW),
wherein the arrangement comprises a gateway component (GK) and the external application (AW),
wherein the external application (AW) is arranged outside a first data network of the data source, in particular is operated in a data cloud and/or a second data network,
wherein the gateway component (GK), in particular an industrial Edge device, is designed to process raw data from the data source and to make the processed data available to the external application (AW), wherein the gateway component is designed
to use a first step to receive a work order from the external application (AW), wherein the work order comprises at least details about an identity and/or role of the user of the external application (AW), about the raw data to be processed from the automation arrangement, an algorithm for the abstraction and/or anonymization of the raw data and details about a frequency or regularity of the data processing,
to use a second step to check the work order,
to use a third step to capture and process the raw data according to the work order, and
to use a fourth step to provide the abstracted and/or anonymized data to the external application or to a destination defined in the work order,
**characterized in that**
the gateway component (GK) is designed
to respond to a negative check in the second step by transmitting a response message with alternative conditions of the work order to the external application (AW), and
wherein the external application (AW) is designed to confirm or reject the alternative conditions or to define a new work order.

8. Arrangement according to Patent Claim 7,
**characterized in that**
the work order comprises the offer of recompense for the provision of the abstracted and/or anonymized data.

9. Arrangement according to either of Patent Claims 7 and 8,
**characterized**
**in that** there is provision for a certificate authority designed to check the algorithm, before or during the second step, with regard to the meeting of data protection criteria.

10. Arrangement according to Patent Claim 9,
**characterized**
**in that** the gateway component is designed to cite or transmit the data protection criteria to the certificate authority.

11. Arrangement according to one of Patent Claims 7 to 10,
**characterized in that**
there is provision for the check in the second step to take account of the identity or role of the user of the external application.

12. Arrangement according to one of Patent Claims 7 to 11,
**characterized in that**
there is provision for a service for providing industrial applications, in particular an industrial app store, wherein the service is designed to provide a number of prepared work orders or at least one prepared algorithm for retrieval.

## Revendications

1. Procédé pour mettre à disposition d'une application (AW) extérieure des données d'une source de données, en particulier d'un système (AA) d'automatisation industrielle,
dans lequel l'application (AW) extérieure est disposée en dehors d'un premier réseau de données de la source de données, en fonctionnant en particulier dans un nuage de données et/ou un deuxième réseau de données,
dans lequel, par un composant (GK) de passerelle, en particulier un appareil edge industriel, on traite des données brutes de la source de données et on met les données traitées à disposition de l'application (AW) extérieure,
dans lequel, dans un premier stade, on transmet de l'application extérieure un ordre de travail au composant de passerelle, dans lequel l'ordre de travail comprend au moins des indications sur une identité et/ou un rôle de l'utilisateur de l'application extérieure, sur les données brutes à traiter de la source de données, un algorithme pour l'abstraction et/ou l'anonymisation des données brutes et des indications d'un grand nombre ou de la fréquence du traitement de données,
dans lequel, dans un deuxième stade, on contrôle l'ordre de travail par le composant de passerelle,
en ce que, dans un troisième stade, on saisit les données brutes suivant l'ordre de travail et on les traite,
dans lequel, dans un quatrième stade, on met les données abstraites et/ou anonymisées à disposition de l'application extérieure ou d'une cible définie dans l'ordre de travail,
**caractérisé en ce que**,
dans le deuxième stade, si le contrôle est négatif, on transmet un message de réponse avec des conditions alternatives de l'ordre de travail à l'application extérieure, dans lequel l'application extérieure confirme les conditions alternatives ou les écarte ou les utilise pour la définition d'un nouvel ordre de travail.

2. Procédé suivant la revendication 1,
**caractérisé en ce que**,
par l'ordre de travail, on offre une contrepartie pour la mise à disposition des données abstraites et/ou anonymisées.

3. Procédé suivant l'une des revendications précédentes,
**caractérisé en ce qu'**
avant ou pendant le deuxième stade, on contrôle l'algorithme par un poste de certification en ce qui concerne le respect de critères de protection des données.

4. Procédé suivant la revendication 3,
**caractérisé en ce que**
les critères de protection des données sont nommés ou transmis au poste de certification par le composant de passerelle.

5. Procédé suivant l'une des revendications précédentes,
**caractérisé en ce que**,
dans le deuxième stade, on prend en compte, lors du contrôle, l'identité ou le rôle de l'utilisateur de l'application extérieure.

6. Procédé suivant l'une des revendications précédentes,
**caractérisé en ce que**
l'on met à disposition l'ordre de travail ou au moins l'algorithme, au moyen d'un service de mise à disposition d'applications industrielles, en particulier d'un app-store industriel.

7. Système pour mettre à disposition d'une application (AW) extérieure des données d'une source de données, en particulier d'un système (AA) d'automatisation industrielle,
dans lequel le système comprend un composant (GK) de passerelle et l'application (AW) extérieure,
dans lequel l'application (AW) extérieure est disposée en dehors d'un premier réseau de données de la source de données, en fonctionnant en particulier dans un nuage de données et/ou un deuxième réseau de données,
dans lequel le composant (GK) de passerelle, en particulier un appareil edge industriel, est agencé pour traiter des données brutes de la source de données et pour mettre les données traitées à disposition de l'application (AW) extérieure, le composant de passerelle étant agencé pour
dans un premier stade, recevoir de l'application (AW) extérieure un ordre de travail, dans lequel l'ordre de travail comprend au moins des indications sur une identité et/ou un rôle de l'utilisateur de l'application (AW) extérieure, sur les données brutes à traiter de la source de données, un algorithme pour l'abstraction et/ou l'anonymisation des données brutes et des indications d'un grand nombre ou de la fréquence du traitement de données,
dans un deuxième stade, contrôler l'ordre de travail,
dans un troisième stade, saisir les données brutes suivant l'ordre de travail et les traiter, et
dans un quatrième stade, mettre les données abstraites et/ou anonymisées à disposition de l'application extérieure ou d'une cible définie dans l'ordre de travail,
**caractérisé en ce que**
le composant (GK) de passerelle est agencé pour transmettre, dans le deuxième stade dans le cas d'un contrôle négatif, un message de réponse avec des conditions alternatives de l'ordre de travail à l'application (AW) extérieure, et dans lequel l'application (AW) extérieure est agencée pour confirmer ou écarter les conditions alternatives ou pour la définition d'un nouvel ordre de travail.

8. Système suivant la revendication 7,
**caractérisé en ce que**
l'ordre de travail comprend la demande d'une contrepartie pour la mise à disposition des données abstraites et/ou anonymisées.

9. Système suivant l'une des revendications 7 ou 8,
**caractérisé en ce qu'**
il est prévu un poste de certification, qui est agencé pour contrôler avant ou pendant le deuxième stade, l'algorithme en ce qui concerne le respect de critères de protection de données.

10. Système suivant la revendication 9,
**caractérisé en ce que**
le composant de passerelle est agencé pour nommer ou transmettre les critères de protection des données au poste de certification.

11. Système suivant l'une des revendications 7 à 10,
**caractérisé en ce qu'**
il est prévu de prendre en compte, dans le deuxième stade lors du contrôle, l'identité ou le rôle de l'utilisateur de l'application extérieure.

12. Système suivant l'une des revendications 7 à 11,
**caractérisé en ce qu'**
il est prévu un service de mise à disposition d'applications industrielles, en particulier un app-store industriel, dans lequel le service est agencé pour mettre à disposition un nombre d'ordres de travail préparés à l'avance ou du moins un algorithme préparé à l'avance à appeler.
